# EUROPÄISCHE PATENTSCHRIFT

(11) **EP 2 786 008 B1**
(45) Veröffentlichungstag und Bekanntmachung des Hinweises auf die Patenterteilung: **16.09.2015**
(21) Anmeldenummer: 12791192.3
(22) Anmeldetag: 27.11.2012
(51) Int. Cl.: F02M 35/02, F02M 35/024, B01D 46/10, B01D 46/00

(54) **LUFTFILTER**
AIR FILTER
FILTRE À AIR

(30) Priorität: 01.12.2011 DE 102011087526
(43) Veröffentlichungstag der Anmeldung: 08.10.2014
(73) Patentinhaber: Mahle International GmbH, 70376 Stuttgart (DE)
(72) Erfinder: KAISER, Sven, Alexander, 71364 Winnenden (DE)
(74) Vertreter: BRP Renaud & Partner mbB Rechtsanwälte Patentanwälte Steuerberater
(86) Internationale Anmeldenummer: PCT/EP2012/073689
(87) Internationale Veröffentlichungsnummer: WO 2013/079467

(56) Entgegenhaltungen:
- WO-A1-2009/007052
- DE-A1-102004 026 105
- DE-A1-102005 031 501
- DE-A1-102006 039 952
- DE-U1-202011 050 533
- JP-A- 11 125 158

## Beschreibung

Die vorliegende Erfindung betrifft ein Luftfilter, insbesondere einer Frischluftanlage einer Brennkraftmaschine, vorzugsweise eines Kraftfahrzeugs, mit den Merkmalen des Oberbegriffs des Anspruchs 1. Die Erfindung betrifft außerdem ein Verfahren zum Herstellen eines derartigen Luftfilters.

Aus der DE 10 2006 039 952 A1 ist ein Luftfilter bekannt, das ein Gehäuse, eine Zwischenplatte und ein Filterelement umfasst. Das Gehäuse weist eine erste Gehäuseschale und eine zweite Gehäuseschale auf. Die Zwischenplatte trennt im Gehäuse einen Rohraum von einem Reinraum und weist eine Durchgangsöffnung auf. Das Filterelement ist in die Durchgangsöffnung eingesetzt. Durch die Verwendung einer Zwischenplatte als Träger für das Filterelement kann das Gehäuse hinsichtlich seiner Formgebung weitgehend unabhängig von der Form des Filterelements konfiguriert werden. Hierdurch lassen sich vorhandene Bauräume besser ausnutzen.

Ein weiterer derartiger Luftfilter ist aus der WO 2009/007052 A1 bekannt.

Es hat sich gezeigt, dass eine dichte Trennung zwischen Reinraum und Rohraum im Gehäuse problematisch ist.

Die vorliegende Erfindung beschäftigt sich mit dem Problem, für ein Luftfilter der eingangs genannten Art eine verbesserte Ausführungsform anzugeben, die sich insbesondere durch eine effektive Abdichtung auszeichnet. Außerdem ist eine einfache Montierbarkeit angestrebt.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, das Filterelement mit einer umlaufenden Dichtung auszustatten, die im montierten Zustand an einer umlaufenden Dichtkontur dichtend zur Anlage kommt, wobei diese Dichtkontur an einem die Durchgangsöffnung der Zwischenplatte einfassenden Innenrand ausgebildet ist. Auf diese Weise verschließt das Filterelement die Durchgangsöffnung gasdicht bzw. luftdicht, sodass die Luft zwangsläufig das Filterelement durchströmen muss, um vom Rohraum zum Reinraum zu kommen.

Die Verwendung einer derartigen Zwischenplatte ermöglicht es insbesondere, gleiche Filterelemente in verschiedenen Gehäusen unterzubringen oder unterschiedliche Filterelemente in gleichen Gehäusen anzuordnen. In diesen Fällen dient die Zwischenplatte als Adapter.

Die Zwischenplatte ist dabei bevorzugt ein bezüglich der beiden Gehäuseschalen ein separates Bauteil. Das Filterelement ist mit der daran angebrachten Dichtung bezüglich der Zwischenplatte und bezüglich der beiden Gehäuseschalen ein separates Bauteil. Vorzugsweise ist das Gehäuse in Zweischalenbauweise realisiert, so dass nur die beiden Gehäuseschalen vorgesehen sind, die zusammen mit der Zwischenplatte das Gehäuse komplettieren. In diesem Fall ist der Reinraum durch die Zwischenplatte und die eine oder erste Gehäuseschale begrenzt, während der Rohraum durch die Zwischenplatte und die andere oder zweite Gehäuseschale begrenzt ist.

Außerdem ist ein Fixierungsrahmen vorgesehen, der an einer von der Dichtkontur abgewandten Seite der Dichtung entlang des Filterelements umläuft und an der Zwischenplatte befestigt ist. Mit Hilfe eines derartigen Fixierungsrahmens kann zum einen die Dichtigkeit mit erhöhter Zuverlässigkeit gewährleistet werden, da mit Hilfe des Fixierungsrahmens ein stationäres Widerlager im Bereich der Dichtung geschaffen wird. Durch die Montage des Fixierungsrahmens ist die Dichtung zwischen der Dichtkontur und dem Fixierungsrahmen angeordnet.

Der Fixierungsrahmen ist bezüglich der Zwischenplatte und bezüglich der beiden Gehäuseschalen ein separates Bauteil. Auch ist der Fixierungsrahmen bezüglich des mit der Dichtung ausgestatteten Filterelements ein separates Bauteil.

Entsprechend einer vorteilhaften Weiterbildung kann der Fixierungsrahmen die Dichtung gegen die Dichtkontur vorspannen, was die Effizienz der Dichtung verbessert.

Bei einer weiteren vorteilhaften Weiterbildung kann die Dichtung fest mit dem Filterelement verbunden sein. Der Fixierungsrahmen ist dagegen bevorzugt bzgl. des Filterelements lose angeordnet. Das Filterelement kann dadurch mit Hilfe des Fixierungsrahmens an der Zwischenplatte festgelegt werden. Mit anderen Worten, das Filterelement wird mit Hilfe seiner Dichtung im Bereich der Durchgangsöffnung in die Zwischenplatte eingesetzt, wodurch eine Positionierung des Filterelements an der Zwischenplatte erfolgt. Durch die Anbringung des Fixierungsrahmens erfolgt dann die Befestigung des Filterelements an der Zwischenplatte. Somit kann auf eine gesonderte Fixierung oder direkte Fixierung des Filterelements an der Zwischenplatte verzichtet werden. Insbesondere kann daher das Filterelement ausschließlich mittels des Fixierungsrahmens an der Zwischenplatte befestigt sein.

Zweckmäßig kann der Fixierungsrahmen mittels Clipelementen an der Zwischenplatte befestigt sein, was die Montage vereinfacht, da auf separate Befestigungsmittel verzichtet werden kann. Insbesondere können dabei die Clipelemente integral am Fixierungsrahmen ausgeformt sein, was den Herstellungsaufwand reduziert.

Die Zwischenplatte kann komplementär zu den Clipelementen des Fixierungsrahmens Gegenclipelemente aufweisen, die zum Befestigen des Fixierungsrahmens an der Zwischenplatte mit den Clipelementen des Fixierungsrahmens zusammenwirken. Derartige Gegenclipelemente vereinfachen die Montage. Auch hier ist es zweckmäßig, die Gegenclipelemente integral an der Zwischenplatte auszuformen, um den Herstellungsaufwand zu reduzieren.

Die Dichtung kann an ihrer von der Dichtkontur abgewandten Seite eine vorzugsweise geschlossen umlaufende Dichtrinne bilden, die insbesondere ein U-förmiges Querschnittsprofil aufweist. Hierdurch besitzt die Dichtung in radialer Richtung eine gewisse Elastizität, wodurch die Dichtung mit radialer Vorspannung radial an der Dichtkontur zur Anlage kommen kann. Ferner ist es grundsätzlich möglich, am Fixierungsrahmen einen umlaufenden Rand auszuformen, der zumindest teilweise in die Rinne der Dichtung hineinragt. Bspw. können über den Rand axiale Vorspannungskräfte auf die Dichtung übertragen werden. Sofern der Rand komplementär zur Rinne geformt ist kann über den Rand auch eine radiale Vorspannung in die Dichtung eingebracht werden.

Entsprechend einer anderen vorteilhaften Ausführungsform kann die Dichtkontur eine vorzugsweise geschlossen umlaufende Konturrinne bilden, die zweckmäßig ein U-förmiges Querschnittsprofil besitzt. In diese Konturrinne ist die Dichtung eingesetzt. Mit Hilfe der Rinne wird somit eine Aufnahme für die Dichtung definiert, was die Montage und die Realisierung einer effizienten Abdichtung vereinfacht. Insbesondere können die Dichtung und die Rinne geometrisch so aufeinander abgestimmt sein, dass die Dichtung axial und radial innen sowie radial außen an der Dichtkontur zur Anlage kommt. Die Dichtungswirkung ist dann von besonders hoher Güte. Optional kann außerdem vorgesehen sein, dass die Dichtung soweit in die Rinne eintauchen kann, dass sie auch axial an der Dichtkontur zur Anlage kommt.

Zweckmäßig kann bei einer Weiterbildung vorgesehen sein, dass der Fixierungsrahmen einen vorzugsweise geschlossen umlaufenden Rand aufweist, dessen Außenkontur komplementär zu einer Innenkontur einer Außenwand der Rinne geformt ist. In der Folge kann der Fixierungsrahmen mit seinem Rand die Rinne mit darin eingelegter Dichtung verschließen. Insbesondere kann der Rand des Fixierungsrahmens dabei zumindest teilweise in die Rinne eintauchen.

Entsprechend einer anderen Ausführungsform kann die Zwischenplatte an ihrem umlaufenden Außenrand mit einem der zweiten Gehäuseschale zugewandten Rand der ersten Gehäuseschale verschweißt sein. Eine derartige Schweißverbindung lässt sich vergleichsweise einfach herstellen und führt zu einer effizienten Abdichtung zwischen der ersten Gehäuseschale und der Zwischenplatte.

Bei einer anderen Ausführungsform kann die Zwischenplatte an ihrem umlaufenden Außenrand mittels Clipelementen an einem der ersten Gehäuseschale zugewandten Rand der zweiten Gehäuseschale befestigt sein. Mit anderen Worten, die zweite Gehäuseschale ist nicht direkt an der ersten Gehäuseschale befestigt, sondern ist direkt an der Zwischenplatte befestigt, während die Zwischenplatte zweckmäßig an der ersten Gehäuseschale direkt befestigt ist. Insbesondere kann vorgesehen sein, dass die Zwischenplatte unlösbar mit der ersten Gehäuseschale verbunden ist, während sie mit der zweiten Gehäuseschale lösbar verbunden ist, zweckmäßig mit Hilfe der Clipelemente. Besagte Clipelemente können vorzugsweise integral an der Zwischenplatte ausgeformt sein.

Bei einer anderen Ausführungsform kann der Innenrand der Zwischenplatte entlang des gesamten Umfangs von einem Außenrand der Zwischenplatte beabstandet sein. Während der Innenrand die Durchgangsöffnung umschließt, ist der Außenrand axial zwischen einander zugewandten Rändern der Gehäuseschalen angeordnet. Durch den Abstand zwischen Innenrand und Außenrand kann auch die Geometrie des Innenrands völlig unabhängig von der Geometrie des Außenrands geformt werden. Außerdem ist das Filterelement dann vollständig von einem Luftvolumen innerhalb des Gehäuses umschlossen. Das Luftvolumen bildet eine thermische Isolation für das Filterelement, insbesondere für die Dichtung.

Ein besonderer Vorteil der hier vorgestellten Bauweise ergibt sich dann, wenn für die Dichtung des Filterelements ein Werkstoff verwendet wird, dessen Temperaturfestigkeit kleiner ist als die Temperaturfestigkeit der Werkstoffe der Gehäuseschalen und der Zwischenplatte. Hochwertige Dichtungswerkstoffe besitzen im Vergleich zu typischen Kunststoffen von Gehäuseschalen eine relativ niedrige Temperaturfestigkeit. Üblicherweise ist ein Luftfilter in einem Motorraum eines Fahrzeugs angeordnet, sodass während des Betriebs der Brennkraftmaschine im Bereich des Luftfilters durchaus Temperaturen auftreten können, die eine Grenztemperatur für die Festigkeit des Dichtungsmaterials übersteigen. Durch die hier vorgestellte Positionierung des Filterelements im Inneren des Filtergehäuses mit Hilfe einer Zwischenplatte kann die thermische Belastung der Dichtung erheblich reduziert werden. Dies gilt insbesondere für den Fall, dass der Innenrand der Zwischenrand vom Außenrand der Zwischenplatte beabstandet ist. Während des Betriebs der Brennkraftmaschine wird außerdem permanent Frischluft angesaugt, wodurch das Filterelement und die Dichtung gekühlt werden. Bei ausgeschalteter Brennkraftmaschine bildet das Luftvolumen eine um die Dichtung des Filterelements umlaufende Isolation, welche die Dichtung vor von außen einwirkender Wärme schützt. Dies ist insbesondere während der Nachheizphase vorteilhaft, die unmittelbar nach dem Ausschalten der Brennkraftmaschine auftritt und bei der keine Frischluft mehr angesaugt wird, während die Brennkraftmaschine aufgrund der vorhergehenden Verbrennungsvorgänge noch sehr heiß ist und dementsprechend viel Wärme abgibt.

Bei einer anderen vorteilhaften Ausführungsform kann das Filterelement eben ausgestaltet sein und in einer Filterebene liegen. Ebene Filterelemente können auch als Plattenfilter bezeichnet werden. Sie können eine rechteckige Außenkontur besitzen und zweckmäßig ein gefaltetes Filtermaterial aufweisen. Die Zwischenplatte kann in einem an dem Innenrand anschließenden Bereich eben ausgestaltet sein und in einer Plattenebene liegen. Zweckmäßig können nun Filterebene und Plattenebene gegeneinander geneigt sein. Hierdurch ist es möglich, das Filterelement im Inneren des Gehäuses völlig unabhängig von der Lage einer Trennebene zwischen den Gehäuseschalen zu positionieren, wodurch die Gestaltung des Filtergehäuses abhängig von den Bauraumgegebenheiten und unabhängig von der Geometrie des Filterelements durchgeführt werden kann.

Die vorliegende Erfindung betrifft auch ein Verfahren zum Herstellen eines derartigen Luftfilters. Entsprechend einem erfindungsgemäßen Herstellungsverfahren wird zunächst die Zwischenplatte an der ersten Gehäuseschale befestigt, bspw. mittels eines Schweißverfahrens. Anschließend wird das Filterelement in die Durchgangsöffnung der Zwischenplatte eingesetzt, sodass die Dichtung an der Dichtkontur anliegt. Danach wird der Fixierungsrahmen angebracht, um das Filterelement an der Zwischenplatte zu fixieren. Zweckmäßig wird dabei der Fixierungsrahmen an der Zwischenplatte verclipst. Schließlich wird die zweite Gehäuseschale an der Zwischenplatte befestigt, zweckmäßig durch Verclipsen. Somit ergibt sich eine besonders einfach realisierbare und manuell durchführbare Montage für das Luftfilter.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine teilweise geschnittene Seitenansicht eines Luftfilters,
- Fig. 2: eine auseinandergezogene isometrische Ansicht des Luftfilters,
- Fig. 3-10: isometrische Ansichten des Luftfilters bei verschiedenen Herstellungsphasen.

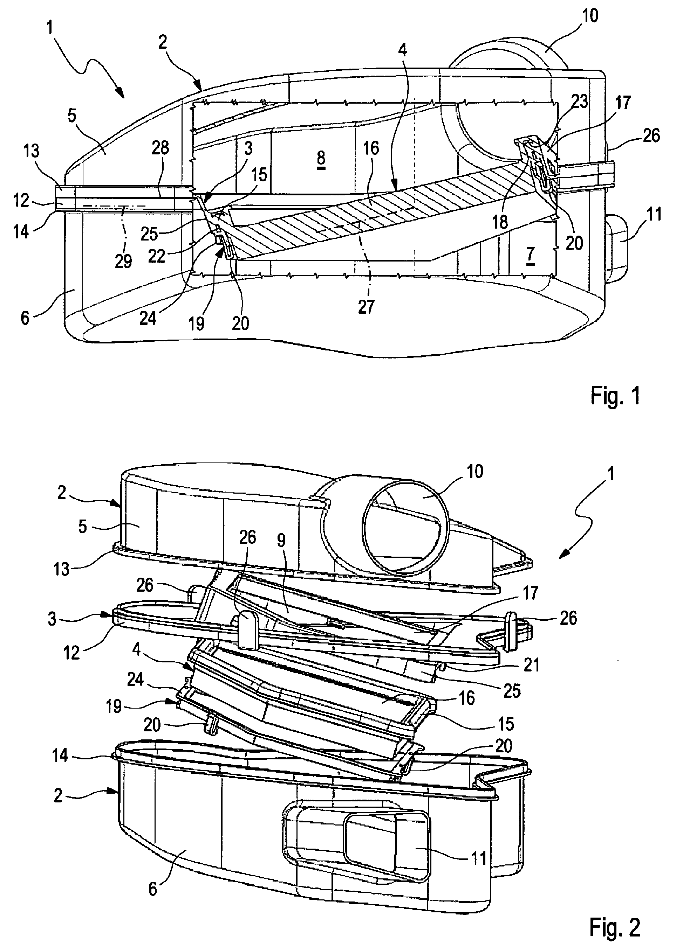

Entsprechend den Figuren 1 bis 10 umfasst ein Luftfilter 1, das zweckmäßig bei einer Frischluftanlage einer Brennkraftmaschine zur Verwendung kommt, und zwar vorzugsweise in einem Kraftfahrzeug, ein Gehäuse 2, eine Zwischenplatte 3 sowie ein Filterelement 4. Das Gehäuse 2 weist eine erste Gehäuseschale 5 und eine zweite Gehäuseschale 6 auf. Die Zwischenplatte 3 trennt im Gehäuse 2 einen Rohraum 7 von einem Reinraum 8 und weist eine Durchgangsöffnung 9 auf. Das Filterelement 4 ist in die Durchgangsöffnung 9 eingesetzt. Die erste Gehäuseschale 5 weist einen reinseitigen Luftauslass 10 auf. Die zweite Gehäuseschale 6 weist einen rohseitigen Lufteinlass 11 auf. Ein Außenrand 12 der Zwischenplatte ist zwischen einem Rand 13 der ersten Gehäuseschale 5 und einem Rand 14 der zweiten Gehäuseschale 6 angeordnet.

Das Filterelement 4 weist eine umlaufende Dichtung 15 auf, die zweckmäßig aus einem geeigneten Dichtungsmaterial hergestellt ist. Dabei kann die Dichtung 15 an einen Filterkörper 16 des Filterelements 4 angespritzt oder angeschäumt sein. Der Filterkörper 16 besteht aus einem Filtermaterial, das insbesondere bahnenförmig und gefaltet sein kann. Vorzugsweise sind das Filtermaterial und das Dichtungsmaterial unterschiedlich. Bspw. besteht die Dichtung 15 aus Polyurethan, und zwar insbesondere aus einem Polyurethanschaum.

Die Zwischenplatte 3 besitzt einen Innenrand 17, der die Durchgangsöffnung 9 umfasst und eine umlaufende Dichtkontur 18 aufweist. Im montierten Zustand liegt die Dichtung 15 an der Dichtkontur 18 an.

Das hier vorgestellte Luftfilter 1 umfasst außerdem einen Fixierungsrahmen 19. Dieser ist an einer von der Dichtkontur 18 abgewandten Seite der Dichtung 15 angeordnet. Dabei ist der Fixierungsrahmen 19 an der Zwischenplatte 3 befestigt, z. B. im Bereich des Innenrands 17. Ferner läuft der Fixierungsrahmen 19 entlang des Filterelements 4 in der Umfangsrichtung geschlossen um. Im montierten Zustand ist die Dichtung 15 zwischen der Dichtkontur 18 und dem Fixierungsrahmen 19 angeordnet. Zweckmäßig kann der Fixierungsrahmen 19 die Dichtung 15 gegen die Dichtkontur 18 vorspannen.

Die Dichtung 15 ist zweckmäßig fest mit dem Filterelement 4 verbunden. Wie gesagt, kann die Dichtung 15 an den Filterkörper 16 angespritzt oder angeschäumt sein. Bzgl. des Filterelements 4 ist der Fixierungsrahmen 19 lose angeordnet, sodass also keine feste Verbindung zwischen Fixierungsrahmen 19 und Filterelement 4 vorliegt. Das Filterelement 4 ist nun mittels des Fixierungsrahmens 19 an der Zwischenplatte 3 festgelegt. Dabei kann der Fixierungsrahmen 19 zweckmäßig mit Hilfe von Clipelementen 20 an der Zwischenplatte 3 befestigt sein. Im Beispiel sind diese Clipelemente 20 integral am Fixierungsrahmen 19 ausgeformt. Die Clipelemente 20 wirken im Beispiel zum Befestigen des Fixierungsrahmens 19 an der Zwischenplatte 3 mit Gegenclipelementen 21 zusammen, die an der Zwischenplatte 3 ausgebildet sind. Zweckmäßig sind auch die Gegenclipelemente 21 integral an der Zwischenplatte 3 ausgeformt. Die Gegenclipelemente 21 sind im Beispiel im Bereich des Innenrands 17 angeordnet.

Die Dichtung 15 kann an ihrer von der Dichtkontur 18 abgewandten Seite eine geschlossen umlaufende Rinne 22 aufweisen, die ein U-förmiges oder V-förmiges Querschnittsprofil besitzt.

Die Dichtkontur 18 weist ihrerseits eine geschlossen umlaufende Rinne 23 auf, die ein U-förmiges Querschnittsprofil besitzt. In die Rinne 23 der Dichtkontur 18 ist die Dichtung 15 eingesetzt. Zweckmäßig sind nun die Dichtung 15 und die Rinne 23 der Dichtkontur 18 geometrisch so aufeinander abgestimmt, dass die Dichtung 15 radial innen sowie radial außen an der Dichtkontur 18 zur Anlage kommt. Die Rinne 22 der Dichtung 15 ermöglicht dabei eine radiale Elastizität der Dichtung 15, die zu einer radialen Vorspannung der Dichtung 15 an der Dichtkontur 18 radial innen und radial außen führt. Im Beispiel ist in Fig. 1 axial zwischen der Dichtung 15 und der Dichtkontur 18 ein Axialabstand erkennbar, sodass kein Axialkontakt zwischen Dichtung 15 und Dichtkontur 18 vorliegt. Ebenso ist jedoch eine Konfiguration denkbar, bei welcher die Dichtung 15 zusätzlich auch axial mit der Dichtkontur 18 in Kontakt kommt.

Der Fixierungsrahmen 19 besitzt einen geschlossen umlaufenden Rand 24, dessen Außenkontur zweckmäßig komplementär zu einer Innenkontur einer Außenwand 25 der Rinne 23 der Dichtungskontur 18 geformt ist. Im montierten Zustand kann somit der Fixierungsrahmen 19 mit seinem Rand 24 die Rinne 23 der Dichtkontur 18 verschließen. Ebenso kann der Tragrahmen 24 dabei zumindest teilweise in besagte Rinne 23 eintauchen.

Im fertig montierten Zustand ist die Zwischenplatte 3 an ihrem Außenrand 12 mit dem Rand 13 der ersten Gehäuseschale 5 verschweißt. Ferner ist die Zwischenplatte 3 an ihrem Außenrand 12 mittels Clipelementen 26 an dem Rand 14 der zweiten Gehäuseschale 6 befestigt. Auch diese Clipelemente 26 sind zweckmäßig integral an der Zwischenplatte 3 ausgeformt.

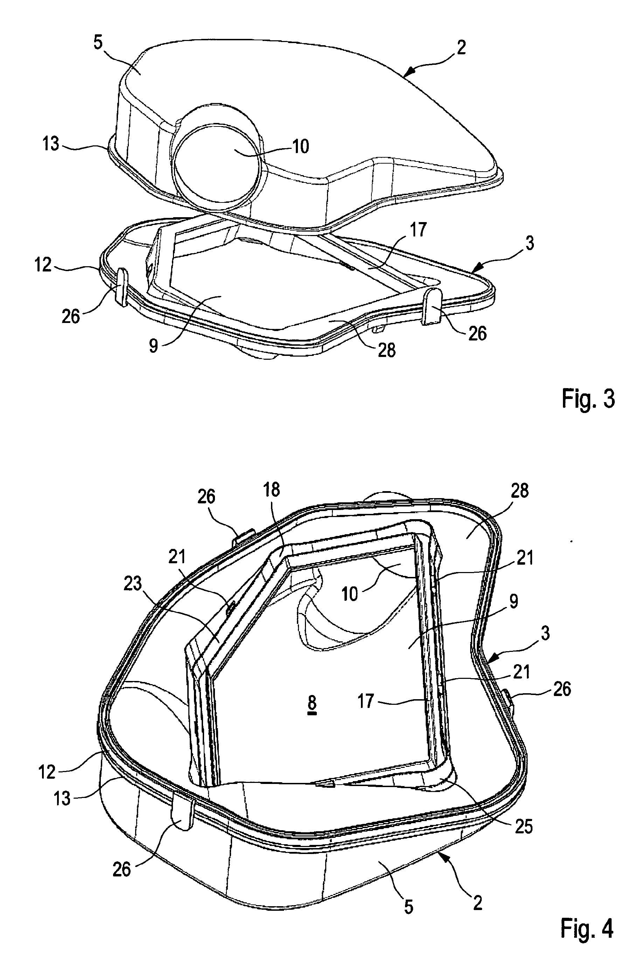

Wie sich insbesondere Fig. 4 entnehmen lässt, ist der Innenrand 17 der Zwischenplatte 3 entlang des gesamten Umfangs vom Außenrand 12 der Zwischenplatte 3 beabstandet. Ferner ist das Filterelement 4 als ebenes Filterelement 4, insbesondere als Plattenfilterelement ausgestaltet, sodass es in einer in Fig. 1 durch eine strichpunktierte Linie angedeuteten Filterebene 27 liegt. Die Zwischenplatte 3 ist in einem Bereich 28, der an den Innenrand 17 anschließt und diesen in einem wesentlichen Umfangsabschnitt umschließt, eben ausgestaltet, sodass besagter Bereich 28 in einer in Fig. 1 durch eine strichpunktierte Linie angedeuteten Plattenebene 29 liegt. Erkennbar verlaufen nun die Filterebene 27 und die Plattenebene 29 geneigt zueinander.

Zweckmäßig sind sämtliche Komponenten des Luftfilters 1 aus Kunststoff hergestellt, wobei für die Gehäuseschalen 5,6, die Zwischenplatte 3 und den Fixierungsrahmen 19 der gleiche Kunststoff verwendet werden kann. Der Filterkörper 16 des Filterelements 4 besteht zweckmäßig aus einem anderen Kunststoff als der Dichtungswerkstoff der Dichtung 15, wobei zumindest der Dichtungswerkstoff der Dichtung 15 aus einem anderen Kunststoff besteht als die Gehäuseschalen 5,6, die Zwischenplatte 3 und der Fixierungsrahmen 19.

Der Dichtungswerkstoff der Dichtung 15 verfügt über eine Temperaturbeständigkeit, welche kleiner ist als die des Werkstoffs der Gehäuseschale 5, 6 und/oder der Zwischenplatte 3. Um die Dichtung 15 vor zu großer Wärmeeinwirkung zu schützen, ist die Dichtung 15 mit einem umlaufend vorgesehenen Abstand zum Rand 12 angeordnet. Somit ist zwischen dem Rand 12 und der Dichtung 15 ein umlaufend ausgebildetes Luftvolumen vorhanden, das einen Schutz vor zu großer Wärmeeinwirkung bildet, insbesondere während einer Nachheizphase beim Ausschalten der Brennkraftmaschine. Das Luftvolumen ist dabei, wie insbesondere Fig. 4 zu entnehmen ist, in dem Bereich 28 gebildet.

Nachfolgend wird anhand der Figuren 3 bis 10 ein Verfahren zum Herstellen eines derartigen Luftfilters 1 näher erläutert.

Entsprechend Fig. 3 wird zunächst die Zwischenplatte 3 an der ersten Gehäuseschale 5 befestigt. Bevorzugt wird hierbei ein Schweißvorgang, insbesondere ein Reibschweißvorgang oder ein Laserschweißverfahren.

Gemäß Fig. 4 liegt nun eine Baugruppe bestehend aus der ersten Gehäuseschale 5 und der Zwischenplatte 3 vor, die den Reinraum 8 enthält.

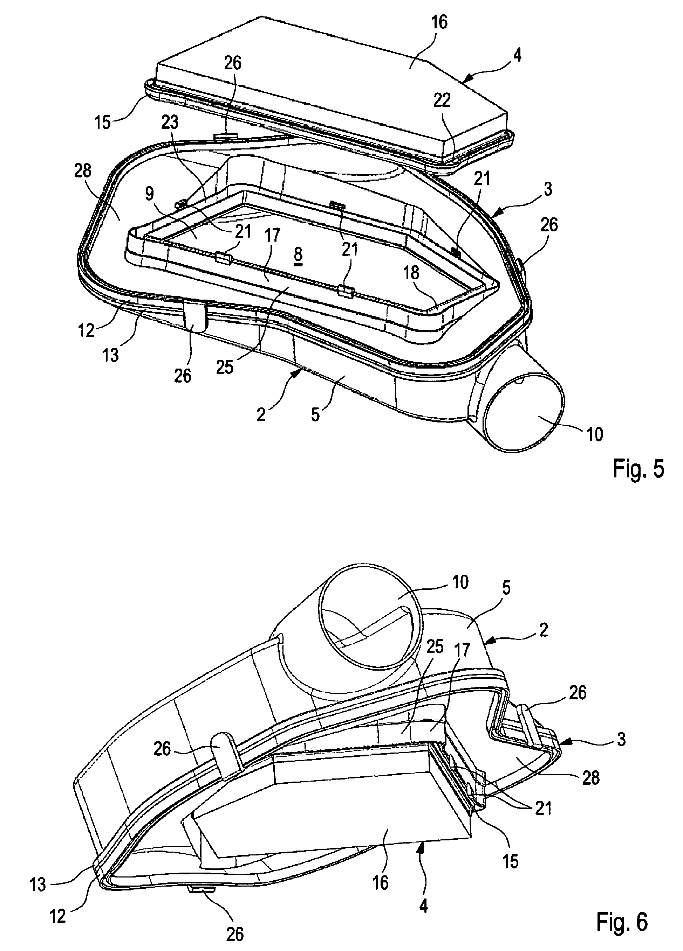

Gemäß Fig. 5 wird nun das Filterelement 4 eingesetzt, wobei das Filterelement 4 mit seinem Filterkörper 16 die Durchgangsöffnung 9 verschließt. Gleichzeitig wird hierbei die Dichtung 15 in die Rinne 23 der Dichtkontur 18 eingesetzt.

Gemäß Fig. 6 liegt nun eine Baugruppe aus erster Gehäuseschale 5, Zwischenplatte 3 und Filterelement 4 vor.

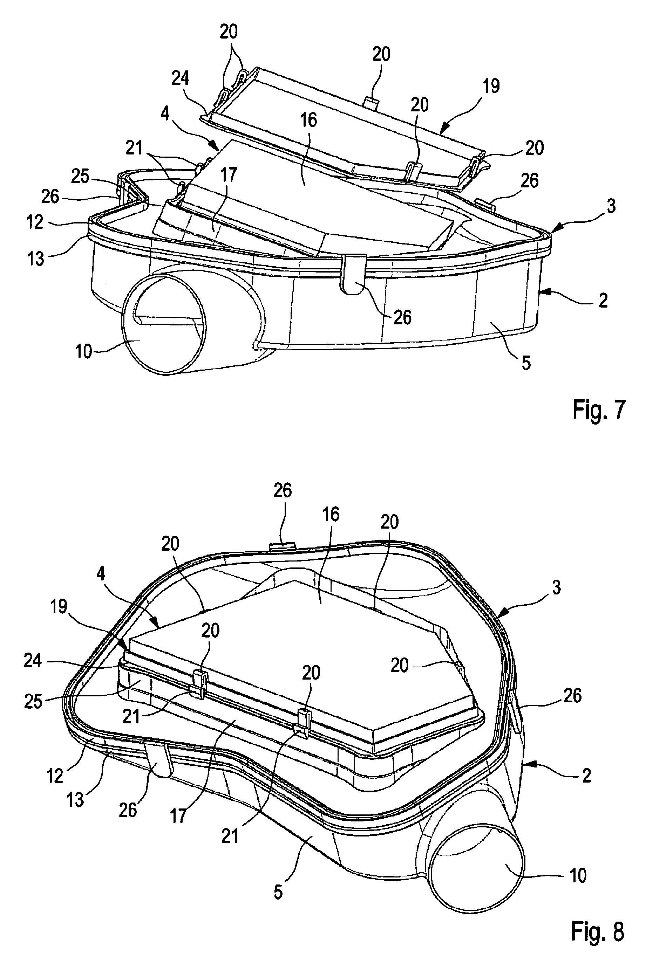

Gemäß Fig. 7 wird anschließend der Fixierungsrahmen 19 montiert. Dieser wird an der Zwischenplatte 3 befestigt, nämlich verclipst, wobei die Clipelemente 20 mit den Gegenclipelementen 21 zusammenwirken.

Gemäß Fig. 8 liegt nun eine Baugruppe bestehend aus der ersten Gehäuseschale 5, der Zwischenplatte 3, dem Filterelement 4 und dem Fixierungsrahmen 19 vor.

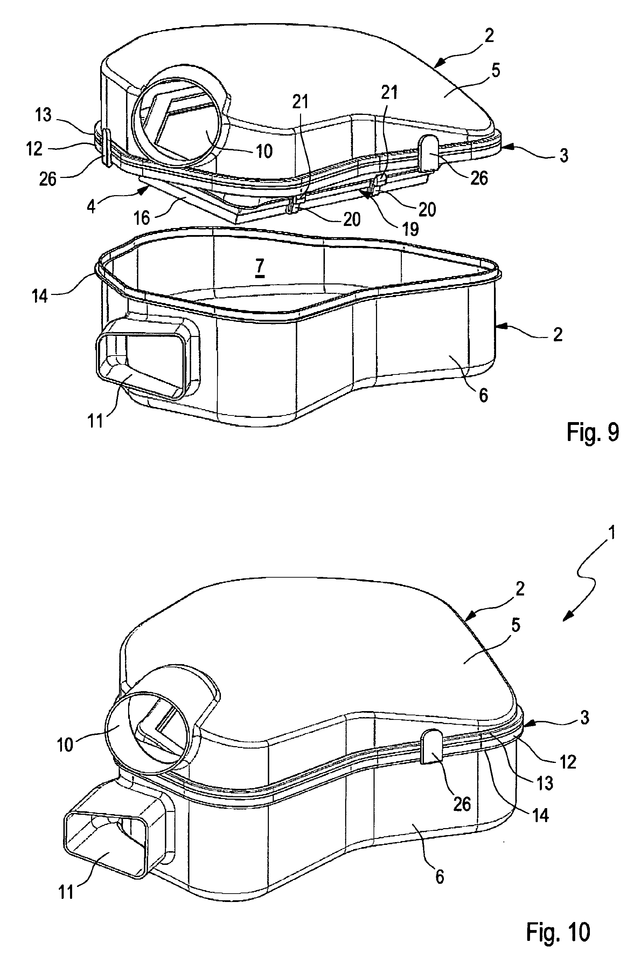

Anschließend kann gemäß Fig. 9 die zweite Gehäuseschale 6 an vorgenannter Baugruppe montiert werden. Hierzu wird die zweite Gehäuseschale 6 an der Zwischenplatte 3 befestigt, nämlich mit Hilfe der Clipelemente 26 verclipt.

Schließlich liegt gemäß Fig. 10 das komplette Luftfilter 1 vor, das aus der ersten Gehäuseschale 5, der Zwischenplatte 3, dem Filterelement 4, dem Fixierungsrahmen 19 und der zweiten Gehäuseschale 6 besteht.

## Patentansprüche

1. Luftfilter, insbesondere einer Frischluftanlage einer Brennkraftmaschine, vorzugsweise eines Kraftfahrzeugs,
- mit einem Gehäuse (2), das eine erste Gehäuseschale (5) und eine zweite Gehäuseschale (6) aufweist,
- mit einer Zwischenplatte (3), die im Gehäuse (2) einen Rohraum (7) von einem Reinraum (8) trennt und die eine Durchgangsöffnung (9) aufweist,
- mit einem Filterelement (4), das in die Durchgangsöffnung (9) eingesetzt ist,
- wobei das Filterelement (4) eine umlaufende Dichtung (15) aufweist,
- wobei die Zwischenplatte (3) an einem die Durchgangsöffnung (9) einfassenden Innenrand (17) eine umlaufende Dichtkontur (18) aufweist, an der die Dichtung (15) anliegt,
**gekennzeichnet durch** einen Fixierungsrahmen (19), der bezüglich der Zwischenplatte (3), bezüglich der beiden Gehäuseschalen (5, 6) und bezüglich des Filterelements (4) ein separates Bauteil ist, an einer von der Dichtkontur (18) abgewandten Seite der Dichtung (15) entlang des Filterelements (4) umläuft und an der Zwischenplatte (3) befestigt ist.

2. Luftfilter nach Anspruch 1,
**dadurch gekennzeichnet,**
**dass** der Fixierungsrahmen (19) die Dichtung (15) gegen die Dichtkontur (18) vorspannt.

3. Luftfilter nach Anspruch 1 oder 2,
**dadurch gekennzeichnet,**
**dass** die Dichtung (15) fest mit dem Filterelement (4) verbunden ist.

4. Luftfilter nach einem der Ansprüche 1 bis 3,
**dadurch gekennzeichnet,**
**dass** der Fixierungsrahmen (19) bzgl. des Filterelements (4) lose angeordnet ist.

5. Luftfilter nach einem der Ansprüche 1 bis 4,
**dadurch gekennzeichnet,**
**dass** das Filterelement (4) mittels des Fixierungsrahmens (19) an der Zwischenplatte (3) festgelegt ist.

6. Luftfilter nach einem der Ansprüche 1 bis 5,
**dadurch gekennzeichnet,**
**dass** der Fixierungsrahmen (19) mittels Clipelementen (20) an der Zwischenplatte (3) befestigt ist, wobei insbesondere vorgesehen sein kann, dass die Clipelemente (20) integral am Fixierungsrahmen (19) ausgeformt sind.

7. Luftfilter nach Anspruch 6,
**dadurch gekennzeichnet,**
**dass** die Zwischenplatte (3) Gegenclipelemente (21) aufweist, die zum Befestigen des Fixierungsrahmens (19) an der Zwischenplatte (3) mit den Clipelementen (20) des Fixierungsrahmens (19) zusammenwirken, wobei insbesondere vorgesehen sein kann, dass die Gegenclipelemente (21) integral an der Zwischenplatte (3) ausgeformt sind.

8. Luftfilter nach einem der Ansprüche 1 bis 7,
**dadurch gekennzeichnet,**
**dass** die Dichtkontur (18) eine umlaufende Rinne (23) bildet, in welche die Dichtung (15) eingesetzt ist, wobei insbesondere vorgesehen sein kann, dass die Dichtung (15) und die Rinne (23) geometrisch so aufeinander abgestimmt sind, dass die Dichtung (15) radial innen sowie radial außen an der Dichtkontur (18) anliegt.

9. Luftfilter nach den Ansprüchen 1 und 8,
**dadurch gekennzeichnet,**
**dass** der Fixierungsrahmen (19) einen umlaufendend Rand (24) aufweist, dessen Außenkontur komplementär zu einer Innenkontur einer Außenwand (25) der Rinne (23) geformt ist.

10. Luftfilter nach einem der Ansprüche 1 bis 9,
**dadurch gekennzeichnet,**
**dass** die Zwischenplatte (3) an ihrem umlaufenden Außenrand (12) mit einem der zweiten Gehäuseschale (6) zugewandten Rand (13) der ersten Gehäuseschale (5) verschweißt ist.

11. Luftfilter nach einem der Ansprüche 1 bis 10,
**dadurch gekennzeichnet,**
**dass** die Zwischenplatte (3) an ihrem umlaufenden Außenrand (12) mittels Clipelementen (26) an einem der ersten Gehäuseschale (5) zugewandten Rand (14) der zweiten Gehäuseschale (6) befestigt ist, wobei insbesondere vorgesehen sein kann, dass die Clipelemente (26) integral an der Zwischenplatte (3) ausgeformt sind.

12. Luftfilter nach einem der Ansprüche 1 bis 11,
**dadurch gekennzeichnet, dass**
der Innenrand (17) der Zwischenplatte (3) entlang des gesamten Umfangs von einem Außenrand (12) der Zwischenplatte (3) beabstandet ist.

13. Luftfilter nach einem der Ansprüche 1 bis 12,
**dadurch gekennzeichnet, dass**
die Temperaturfestigkeit der Dichtung (15) kleiner ist als die Temperaturfestigkeit der Gehäuseschalen (5,6) und der Zwischenplatte (3).

14. Luftfilter nach einem der Ansprüche 1 bis 13,
**dadurch gekennzeichnet,**
- **dass** das Filterelement (4) eben ausgestaltet ist und in einer Fitterebene (27) liegt,
- **dass** die Zwischenplatte (3) in einem an den Innenrand (17) anschließenden Bereich (28) eben ausgestaltet ist und in einer Plattenebene (29) liegt,
- **dass** die Filterebene (27) gegenüber der Plattenebene (29) geneigt verläuft.

15. Verfahren zum Herstellen eines Luftfilters (1) nach einem der Ansprüche 1 bis 14, mit folgenden Schritten:
- Befestigen der Zwischenplatte (3) an der ersten Gehäuseschale (5),
- Einsetzen des Filterelements (4) in die Durchgangsöffnung (9), sodass die Dichtung (15) an der Dichtkontur (18) anliegt,
- Anbringen des Fixierungsrahmens (19) zum Festlegen des Filterelements (4) an der Zwischenplatte (3),
- Befestigen der zweiten Gehäuseschale (6) an der Zwischenplatte (3).

## Claims

1. Air filter, particularly a fresh air system of an internal combustion engine, preferably a motor vehicle,
- having a housing (2) with a first housing shell (5) and a second housing shell (6),
- having an intermediate panel (3) that separates a crude chamber (7) from a clean chamber (8) in the housing (2) and has a passage opening (9),
- having a filter element (4) that is installed in the passage opening (9),
- where the filter element (4) has a surrounding seal (15),
- where the intermediate panel (3) has a surrounding seal contour (18) on an inside edge (17) bordering the passage opening (9), the aforementioned seal (15) resting on said seal contour (18),
**characterised by** a fixing frame (19), which is a separate component with respect to the intermediate panel (3), with respect to both the housing shells (5, 6) and with respect to the filter element (4), encompasses a side of the seal (15) facing away from the seal contour (18) along the filter element (4) and is attached to the intermediate panel (3).

2. Air filter according to claim 1,
**characterised in that**
the fixing frame (19) pretensions the seal (15) against the seal contour (18).

3. Air filter according to claim 1 or 2,
**characterised in that**
the seal (15) is firmly connected to the filter element (4).

4. Air filter according to one of the claims 1 to 3,
**characterised in that**
the fixing frame (19) is loosely arranged with respect to the filter element (4).

5. Air filter according to one of the claims 1 to 4,
**characterised in that**
the filter element (4) is connected to the intermediate panel (3) with the help of the fixing frame (19).

6. Air filter according to one of the claims 1 to 5,
**characterised in that**
the fixing frame (19) is attached to the intermediate panel (3) with the help of clip elements (20), where it can be especially designed such that the clip elements (20) are integrally moulded on the fixing frame (19).

7. Air filter according to claim 6,
**characterised in that**
the intermediate panel (3) has counter-clip elements (21) that interact with the clip elements (20) of the fixing frame (19) for connecting the fixing frame (19) to the intermediate panel (3), where it can be especially designed such that the counter-clip elements (21) are integrally moulded on the intermediate panel (3).

8. Air filter according to claims 1 to 7,
**characterised in that**
the seal contour (18) defines a surrounding channel (23) in which the seal (15) is used, where it can be especially designed such that the seal (15) and the channel (23) are geometrically coordinated in a way that the seal (15) rests against the seal contour (18) radially from inside as well as outside.

9. Air filter according to claims 1 and 8,
**characterised in that**
the fixing frame (19) has a surrounding edge (24) whose external contour is shaped complementary to an internal contour of an outer wall (25) of the channel (23).

10. Air filter according to one of the claims 1 to 9,
**characterised in that**
the intermediate panel (3) at its surrounding outer edge (12) is welded to one of the edges (13) of the first housing shell (5) facing the second housing shell (6).

11. Air filter according to one of the claims 1 to 10,
**characterised in that**
the intermediate panel (3) at its surrounding outer edge (12) is connected with the help of clip elements (26) to one of the edges (14) of the second housing shell (6) facing the first housing shell (5), where it can be especially designed such that the clip elements (26) are integrally moulded on the intermediate panel (3).

12. Air filter according to one of the claims 1 to 11,
**characterised in that**
the inside edge (17) of the intermediate panel (3) is spaced apart from an outside edge (12) of the intermediate panel (3) along the entire circumference.

13. Air filter according to one of the claims 1 to 12,
**characterised in that**
the temperature stability of the seal (15) is less than the temperature stability of the housing shells (5, 6) and the intermediate panel (3).

14. Air filter according to one of the claims 1 to 13,
**characterised in that**
- the filter element (4) is flat and lies in a filter plane (27),
- the intermediate panel (3) is flat in a region (28) adjacent to the inside edge (17) and lies in a panel plane (29),
- the filter plane (27) runs in an incline with respect to the panel plane (29).

15. Method for manufacturing an air filter (1) according to one of the claims 1 to 14, containing the following steps:
- Connecting the intermediate panel (3) to the first housing shell (5),
- Using the filter element (4) in the passage opening (9) so that the seal (15) rests against the seal contour (18),
- Attaching the fixing frame (19) for connecting the filter element (4) to the intermediate panel (3),
- Connecting the second housing shell (6) to the intermediate panel (3).

## Revendications

1. Filtre à air, en particulier d'une installation d'air frais d'un moteur à combustion interne, de préférence d'un véhicule automobile, comprenant :
- un boîtier (2) qui présente une première coque de boîtier (5) et une seconde coque de boîtier (6),
- une plaque intermédiaire (3) qui sépare, dans le boîtier (2), un espace brut (7) d'un espace pur (8) et qui présente une ouverture de passage (9),
- un élément de filtre (4) qui est inséré dans l'ouverture de passage (9),
- dans lequel l'élément de filtre (4) présente un joint étanche périphérique (15),
- dans lequel la plaque intermédiaire (3) présente sur un bord interne (17) qui entoure l'ouverture de passage (9), un contour d'étanchéité périphérique (18) sur lequel l'élément d'étanchéité (15) s'applique,
**caractérisé par** un cadre de fixation (19) qui constitue par rapport à la plaque intermédiaire (3), par rapport aux deux coques (5, 6) du boîtier et par rapport à l'élément de filtre (4), un composant séparé, qui court, sur un côté du joint d'étanchéité (15) opposé au contour d'étanchéité (18), le long de l'élément de filtre (4) et est fixé à la plaque intermédiaire (3).

2. Filtre à air selon la revendication 1,
**caractérisé en ce que** :
le cadre de fixation (19) presse le joint d'étanchéité (15) contre le contour d'étanchéité (18).

3. Filtre à air selon la revendication 1 ou la revendication 2,
**caractérisé en ce que** :
le joint d'étanchéité (15) est solidement fixé à l'élément de filtre (4).

4. Filtre à air selon l'une quelconque des revendications 1 à 3,
**caractérisé en ce que** :
le cadre de fixation (19) ou l'élément de filtre (4) est aménagé détaché.

5. Filtre à air selon l'une quelconque des revendications 1 à 4,
**caractérisé en ce que** :
l'élément de filtre (4) est fixé à la plaque intermédiaire (3) au moyen du cadre de fixation (19).

6. Filtre à air selon l'une quelconque des revendications 1 à 5,
**caractérisé en ce que** :
le cadre de fixation (19) est fixé au moyen d'éléments de serrage (20) sur la plaque intermédiaire (3), dans lequel il peut être prévu en particulier que les éléments de serrage (20) soient formés d'un seul tenant sur le cadre de fixation (19).

7. Filtre à air selon la revendication 6,
**caractérisé en ce que** :
la plaque intermédiaire (3) présente des contre-éléments de serrage (21) qui coopèrent avec les éléments de serrage (20) du cadre de fixation (19) pour fixer le cadre de fixation (19) sur la plaque intermédiaire (3), dans lequel il peut être prévu en particulier que les contre-éléments de serrage (21) soient formés d'un seul tenant sur la plaque intermédiaire (3).

8. Filtre à air selon l'une quelconque des revendications 1 à 7,
**caractérisé en ce que** :
le contour d'étanchéité (18) forme une rigole périphérique (23) dans laquelle le joint d'étanchéité (15) est inséré, dans lequel il peut être prévu en particulier que le joint d'étanchéité (15) et la rigole (23) s'adaptent géométriquement l'un(e) à l'autre de sorte que le joint d'étanchéité (15) s'applique radialement vers l'intérieur ainsi que radialement vers l'extérieur sur le contour d'étanchéité (18).

9. Filtre à air selon les revendications 1 et 8,
**caractérisé en ce que** :
le cadre de fixation (19) présente un bord périphérique (24) dont le contour externe est conformé de manière complémentaire avec un contour interne d'une paroi externe (25) de la rigole (23).

10. Filtre à air selon l'une quelconque des revendications 1 à 9,
**caractérisé en ce que** :
la plaque intermédiaire (3) est soudée, sur son bord extérieur périphérique (12), à un bord (13) de la première coque de boîtier (5) tourné vers la seconde coque de boîtier (6).

11. Filtre à air selon l'une quelconque des revendications 1 à 10,
**caractérisé en ce que** :
la plaque intermédiaire (3) est fixée, sur son bord externe périphérique (12), au moyen d'éléments de serrage (26) sur un bord (14) de la seconde coque de boîtier (6) tourné vers la première coque de boîtier (5), dans lequel il peut être prévu en particulier que les éléments de serrage (26) soient formés d'un seul tenant sur la plaque intermédiaire (3).

12. Filtre à air selon l'une quelconque des revendications 1 à 11,
**caractérisé en ce que** :
le bord interne (17) de la plaque intermédiaire (3) est, sur toute la périphérie, espacé d'un bord externe (12) de la plaque intermédiaire (3).

13. Filtre à air selon l'une quelconque des revendications 1 à 12,
**caractérisé en ce que** :
la résistance à la température du joint d'étanchéité (15) est plus petite que la résistance à la température des coques de boîtier (5, 6) et de la plaque intermédiaire (3).

14. Filtre à air selon l'une quelconque des revendications 1 à 13,
**caractérisé en ce que** :
- l'élément de filtre (4) a une forme plane et se trouve dans un plan de filtre (27),
- la plaque intermédiaire (3) a une forme plane dans une zone (28) se raccordant au bord interne (17) et se situe dans un plan de plaque (29), et
- le plan de filtre (27) s'étend selon une certaine inclinaison par rapport au plan de plaque (29).

15. Procédé de fabrication d'un filtre à air (1) selon l'une quelconque des revendications 1 à 14, comprenant les étapes consistant à :
- fixer la plaque intermédiaire (3) à la première coque de boîtier (5),
- insérer l'élément de filtre (4) dans l'ouverture de passage (9) de sorte que le joint d'étanchéité (15) s'applique sur le contour d'étanchéité (18),
- installer le cadre de fixation (19) pour fixer l'élément de filtre (4) sur la plaque intermédiaire (3), et
- fixer la seconde coque de boîtier (6) sur la plaque intermédiaire (3).
